## Europäisches Patentamt

## European Patent Office

## Office européen des brevets

(19)

(11) Veröffentlichungsnummer: **0 094 660**
**B1**

(12) # EUROPÄISCHE PATENTSCHRIFT

(45) Veröffentlichungstag der Patentschrift:
**11.03.87**

(51) Int. Cl.⁴: **H 04 L 11/16**

(21) Anmeldenummer: **83104781.6**

(22) Anmeldetag: **14.05.83**

(54) Lokales Netzwerk für hohe Übertragungsraten.

(30) Priorität: **14.05.82  DE 3218146**

(43) Veröffentlichungstag der Anmeldung:
**23.11.83 Patentblatt 83/47**

(45) Bekanntmachung des Hinweises auf die Patenterteilung:
**11.03.87 Patentblatt 87/11**

(84) Benannte Vertragsstaaten:
**FR GB IT NL SE**

(56) Entgegenhaltungen:
EP - A - 0 002 971
DE - A - 2 801 209
DE - A - 2 826 017
FR - A - 2 315 725
FR - A - 2 345 015
GB - A - 2 008 362
GB - A - 2 064 919
US - A - 3 593 290
US - A - 3 732 374
US - A - 3 904 829
US - A - 3 985 962
US - A - 3 988 704
US - A - 4 002 842
US - A - 4 159 470
US - A - 4 246 475
PROCEEDINGS OF THE IEEE, Band 66, Nr. 11,
November 1978, Seiten 1497-1517, IEEE, New York, USA
D.D. CLARK et al.: "An introduction to local area networks"
E.D.N. ELECTRICAL DESIGN NEWS, Band 26, Nr. 5, 4.
März 1981, Seiten 93-100, Boston, Massachusetts, USA

(73) Patentinhaber: **Martin, Helmut, Dr.-Ing., Merziger Strasse 6, D-3000 Hannover 71 (DE)**

(72) Erfinder: **Martin, Helmut, Dr.-Ing., Merziger Strasse 6, D-3000 Hannover 71 (DE)**

(74) Vertreter: **Döring, Roger, Dipl.-Ing. et al, Kabelkamp 20, D-3000 Hannover 1 (DE)**

(56) Entgegenhaltungen: (Fortsetzung)
V.L. MIRTICH: "Fiber optics offers promise in data-network design"
NACHRICHTENTECHNISCHE ZEITSCHRIFT, Band 34, Nr. 8, August 1981, Seiten 496-499, Berlin, DE. V. STEINLEIN: "Die digitale Ringleitung"
ELECTRONICS AND COMMUNICATIONS IN JAPAN, Band 60-A, Nr. 3, 1977, Seiten 18-27, Scripta Publishing Co., Washington, USA M. AKIYAMA et al.: "Reliability of loop communication networks"
IBM TECHNICAL DISCLOSURE BULLETIN, Band 15, Nr. 9, Februar 1973, Seiten 2760-2761, New York, USA A.T. HALPIN et al.: "Optical coupler/terminal"
PATENTS ABSTRACTS OF JAPAN, Band 1, Nr. 163, 22. Dezember 1977, Seite 9132 E 77
NACHRICHTENTECHNISCHE ZEITSCHRIFT, Band 30, Nr. 11, November 1977, Seiten 841-842, Berlin, DE. D. RITTICH: "Detektierung und Lokalisierung von Faserbrüchen in optischen Nachrichtenkabeln"

## Beschreibung

Die Erfindung bezieht sich auf ein lokales Netzwerk entsprechend dem Oberbegriff des Patentanspruchs 1. Ein derartiges Netzwerk geht aus der Zeitschrift «Proceedings of the IEEE», Vol. 66, No. 11, November 1978, Seiten 1497 bis 1517 hervor.

Lokale Netzwerke sind Datenübertragungsnetze mit einer räumlich begrenzten Ausdehnung. Sie ermöglichen eine schnelle Datenübertragung bei vergleichsweise niedrigen Kosten. Lokale Netzwerke bestehen aus mindestens einer Leitung, an die eine Vielzahl von Stationen angeschlossen ist. Sie werden beispielsweise in Büroanlagen, kleinen Ortschaften oder Stadtteilen eingesetzt. Bekannte Netzaufbauten sind beispielsweise das Sternnetz, das Liniennetz und das Ringnetz.

Lokale Netzwerke gewinnen in letzter Zeit zunehmend an Bedeutung, da sie beispielsweise für die Übertragung aller Daten im Bürobereich – zwischen Büros und Rechenanlagen, zwischen verschiedenen Rechenanlagen, zwischen Rechenanlagen und ihren peripheren Einheiten oder zwischen den Büros selbst – einschliesslich Sprache und Bild geeignet sind. Die Stationen sind passiv an oder aktiv über Mikroprozessoren in eine Leitung eingeschaltet. Bei dem sogenannten «Ethernet» (Basisbandsystem), das digital arbeitet und aus mehreren mit Stationen besetzten Linien besteht, die an beliebigen Stellen untereinander über Regeneratoren verbunden werden können, ist eine Meldung einer Station jederzeit absetzbar, wenn nicht gerade eine andere Station sendet. Bei stärkerem Verkehr kann es zu Kollisionen zwischen Meldungen unterschiedlicher Stationen ·kommen, was Meldungswiederholungen auslöst. Dieses bekannte Netzwerk ist in seiner räumlichen Ausdehnung sowie in der Datenübertragungsrate begrenzt. Bei sehr starker Belastung kann es zu Verkehrszusammenbrüchen kommen.

Ringnetze, die nach dem Zeitschlitzverfahren arbeiten, lassen nur eine begrenzte Zahl von Stationen zu, wodurch die Übertragungsmöglichkeit des Netzes nicht voll ausgenutzt werden kann. Bei Ringnetzen, die an den Stationen aufgetrennt sind und bei denen die Kopplung über aufprüfende Mikroprozessoren erfolgt, ist die Anzahl der Stationen zwar nicht begrenzt, sie arbeiten jedoch infolge der Kopplung durch aktive Einheiten langsamer. Diese Ringnetze haben ebenso wie alle anderen Netzwerke mit aktiver Einschaltung der Stationen in die Leitungen den Nachteil, dass sie bei Ausfall schon nur einer Station nicht mehr funktionsfähig sind, da dann die Leitung unterbrochen ist.

Bei dem bekannten lokalen Netzwerk nach der eingangs erwähnten Zeitschrift sind die Stationen als aktive Einheiten in die Leitungen eingeschaltet. Das gilt für alle dieser Druckschrift entnehmbaren unterschiedlichen Netzaufbauten. Dieses bekannte Netzwerk hat also den oben angegebenen Nachteil. Es fällt aus, wenn schon eine der in die Leitung eingeschalteten Stationen defekt ist.

In der US-PS 4 246 475 ist eine Anordnung für einen Regenerator eines optischen Übertragungsweges beschrieben, mit der die Funktionsfähigkeit des Übertragungsweges auch bei Ausfall des aktiv eingeschalteten Regenerators erhalten bleiben soll. Die Anordnung sieht dazu einen den Regenerator überbrückenden Bypass vor, dessen Länge so bemessen ist, dass bei intakter Anordnung die über den Regenerator einerseits und den Bypass andererseits laufenden Signale phasengleich weitergeführt werden. Der Bypass ist nur dann erforderlich, wenn der Regenerator ausfällt – also im Notfall. Er hat während des störungsfrei laufenden Betriebs keine Bedeutung. Vom Signalstrom wierd daher durch einen in den Leitungszug eingeschalteten «Mixer» nur ein Bruchteil über den Bypass geführt.

Der Erfindung liegt die Aufgabe zugrunde, ein lokales Netzwerk anzugeben, das bezüglich Anzahl der Stationen, Grösse bzw. Ausdehnung und Datenübertragungsrate nicht begrenzt ist und bei dem der Ausfall von Stationen sich auf seine Funktionsfähigkeit nicht auswirkt.

Diese Aufgabe wird entsprechend den kennzeichnenden Merkmalen des Patentanspruchs 1 gelöst.

Vorteilhafte Ausgestaltungen der Erfindung gehen aus den Unteransprüchen hervor.

Bei diesem lokalen Netzwerk sind die Stationen passiv an die Leitung angekoppelt, die in den Stationen nicht unterbrochen ist. Dadurch macht sich der Ausfall einer oder auch mehr als einer Station für das Netz nicht bemerkbar. Das Netz ist dadurch auch in Grösse und Ausdehnung nicht beschränkt. Es können vielmehr beliebig viele Stationen an eine von einer Hauptstelle ausgehende Leitung angeschlossen werden. Von besonderer Bedeutung für dieses Netzwerk sind die getrennte Ankopplung von Empfangs- und Sendeeinrichtung einer jeden Station und deren Abstand voneinander. Dieser Abstand ist (zeitlich) mindestens ein Bit lang. Es wird dadurch sichergestellt, dass jede Station genügend Zeit hat, ihre Meldung an eine Meldungsserie anzuhängen, wenn in der Empfangseinrichtung erkannt worden ist, dass die an der Station vorbeilaufende Meldungsserie zu Ende ist. Das ist durch eine spezielle Bitfolge erkennbar, die sowohl bei der von der Hauptstelle ausgehenden Meldung (Lokomotive) als auch bei jeder von irgendeiner Station an diese Meldung angehängten Meldung zum Schluss vorhanden ist.

Die Angabe «mindestens ein Bit» für die Länge des zwischen Sende- und Empfangseinrichtung jeder Station liegenden Leitungsteiles ist eine Untergrenze. Nach oben ist praktisch keine Begrenzung vorhanden. Die Länge dieses Leitungsteils muss nur bekannt sein, damit die Laufzeit der Meldungsserien in demselben bekannt ist. Dann nämlich kann die vorbereitete Meldung der betreffenden Station exakt, ohne Lücke bitsynchron an die durchlaufende Meldungsserie angehängt werden. Dieses sichere Anhängen ermöglicht sehr hohe Übertragungsraten bzw. eine sehr schnelle Datenübertragung.

Die Erfindung wird im folgenden anhand der Abbildungen erläutert.

Es zeigen:

Abb. 1 ein in Form eines geteilten Ringes aufgebautes Netzwerk nach der Erfindung.

Abb. 2 einen Stationskoppler dieses Netzwerks in vergrösserter Darstellung.

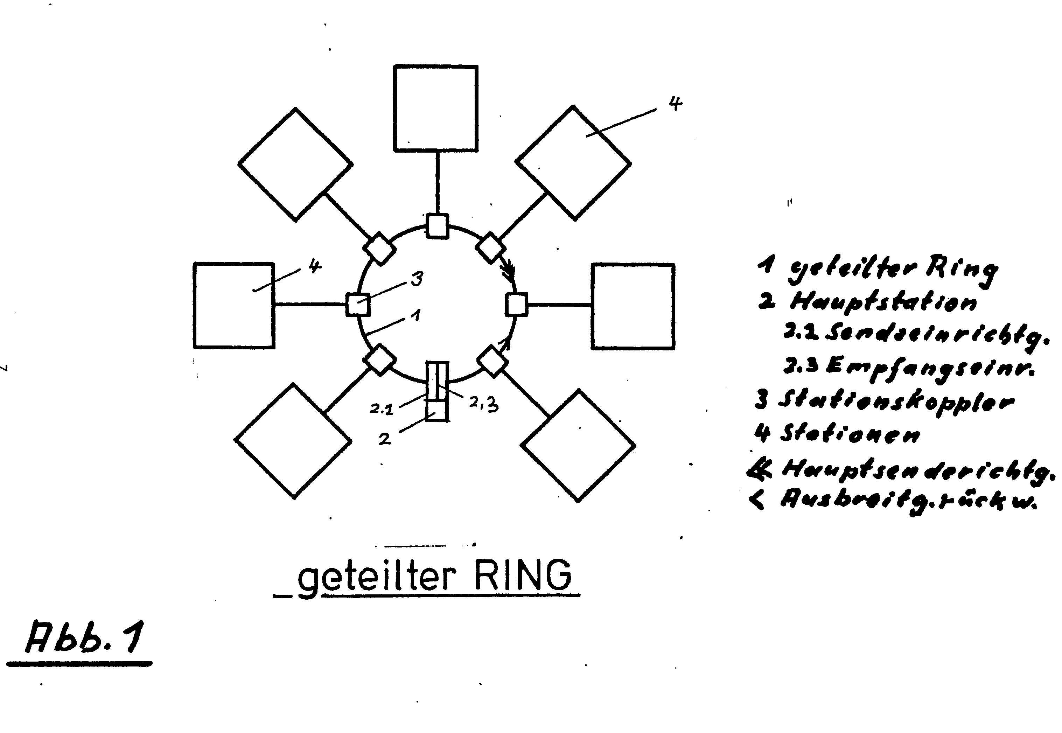

Mit Hinweis auf Abb. 1 läuft ein Meldezyklus beispielsweise wie folgt ab:

Von der Hauptstelle (2), die sich am Anfang der Leitung (1) (geteilter Ring) befindet, wird in kurzer zeitlicher Folge jeweils eine Meldungsserie mit einer speziellen Starbitfolge (Meldungsanfang) eingeleitet, aus der der Bit- und Worttakt entnommen werden kann, auf den sich alle Stationen (4) des Netzwerks synchronisieren müssen. Dazu sendet die Hauptstelle (2) immer dann Bittakt, Worttakt und Satztakt, der aus mehreren Worten besteht, aus, wenn die letzte Meldungsserie das Netz oder zumindest die Sendeleitung verlassen hat. An den Schluss der Startbitfolge wird das Meldungsendezeichen gesetzt und unmittelbar danach das weitere Aussenden von Impulsen abgebrochen. Diese Bitfolge durchläuft nun nacheinander die Stationen (4) der Leitung (1). Diejenigen Stationen (4), die eine Meldung zum Senden vorbereitet haben, erkennen aus der Bitfolge eine als «Freizeichen» definierte Zeichenfolge. Diese Zeichenfolge besteht aus den Worten «Meldungsende» und «Sendepause». Sie ist gleichzeitig die Aufforderung zum Senden. Nach Erkennen des Freizeichens muss sofort in der Sendepause eine Folge von Impulsen als Meldung gesetzt werden, da andernfalls eine der nächsten Stationen (4) das Freizeichen erkennt und ihrerseits mit dem Absetzen einer Meldung beginnt.

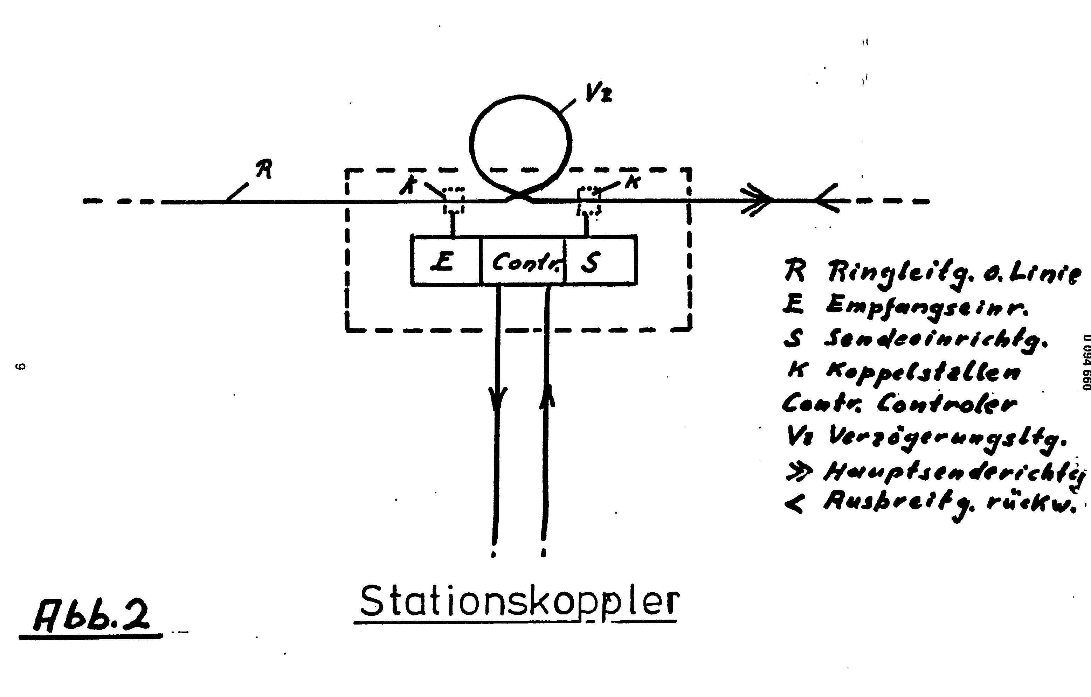

Das Erkennen des Freizeichens durch mindestens ein Null-Bit im Anschluss an das Meldungsendezeichen und das Aussenden von L-Bits unmittelbar im Anschluss an das Meldungsendezeichen werden durch den zwischen der Empfangseinrichtung (E) und der Sendeeinrichtung (S) einer jeden Station (4) liegenden Leitungsteil erreicht. In Abb. 2 ist dieser Leitungsteil als Verzögerungsleitung (Vz) bezeichnet. Sie ist wegen der Reaktionszeit der Aufprüflogik mindestens ein Bit lang. Mittels der Verzögerungsleitung (Vz) in enger Zusammenarbeit von Empfangseinrichtung (E), Aufprüflogik und Sendeeinrichtung (S) ist es möglich, dass jede passiv an die Leitung (1) angekoppelte Station (4) das empfangene Freizeichen noch vor Verlassen des Stationsbereiches in ein Besetztzeichen wandeln kann. Die vorbereitete Meldung wird unmittelbar danach ausgesandt und ihrerseits mit dem Freizeichen beendet.

Die Vorteile dieser Lösung liegen vor allem in den nahezu bis an die physikalische Grenze ausnutzbaren Übertragungsraten des lokalen Netzwerks, der nicht begrenzten Anzahl von Stationen (4) – nicht meldende Stationen belasten das Netzwerk nicht –, der praktisch nicht begrenzten Länge bzw. Grösse des lokalen Netzwerks und der hohen Sicherheit gegen Netzzusammenbruch bei Ausfall nur einer Station durch das passive Ankoppeln derselben an die Leitung (1).

Die in der Hauptsenderichtung zeitlich aneinandergefügten Meldungen breiten sich jeweils in Richtung beider Leitungsenden aus. Sie laufen einmal im zeitlichen Verband der Meldungsserie vorwärts in der Hauptsenderichtung und zum anderen zeitlich, durch die räumliche Ausdehnung bedingt, voneinander getrennt rückwärts in Richtung Hauptstelle (2). Dadurch ist sichergestellt, dass alle Meldungen alle Stationen (4) erreichen.

Bei ausgedehnten Netzwerken und grösserer Dämpfung kann es erforderlich sein, dass Regeneratoren in die Leitung eingeschaltet werden. Um auch die Meldungen, die im Meldungszyklus von nachfolgenden Stationen (4) für weiter vorn liegende Stationen (4) bestimmt sind, empfangen zu können, müssen die Regeneratoren ihre Wirkungsrichtung unmittelbar nach Passieren der Meldungsserie umkehren. Das Zurückschalten auf die Hauptsenderichtung erfolgt unmittelbar nach Eintreffen der nächsten Startbitfolge oder durch ein entsprechend vereinbartes Zeichen der letzten Station (4) der Leitung (1).

Die Linie oder der geteilte Ring des Netzwerks können auch durch eine zweite, identisch aufgebaute und parallel verlegte Leitung ergänzt werden. Die erste Leitung (1) wird dann als Sendeleitung eingesetzt und die zweite Leitung dient als Empfangsleitung. Das bietet den Vorteil, dass alle für eine Station (4) bestimmten Meldungen der kompletten Meldungsserie entnommen werden können, die die Empfangsleitung durchläuft. Es ist dadurch eine bessere Wortsynchronisation und eine damit höhere Sicherheit der Datenübertragung gegeben. Die Empfangseinrichtung (E) in der Sendeleitung hat dann lediglich die Aufgabe, im Bedarfsfall, d.h. bei einer vorbereiteten Meldung, das Freizeichen zu erkennen und den Befehl für das Senden des Besetztzeichens und das Senden der Meldung zu geben. Bei Störung einer der beiden Leitungen kann der Betrieb über die ungestörte Leitung abgewickelt werden.

Durch einen Zeitvergleich der über die Empfangsleitung und die Sendeleitung zur Hauptstelle (2) laufenden Signale – die Regeneratoren des Sendekabels müssen in diesem Fall auf den Einleitungsbetrieb, wie er beschrieben wurde, geschaltet werden – können fehlerhafte Stationen (4) auch dann identifiziert werden, wenn die absendende Station (4) nicht fehlerfrei im Datenpaket enthalten ist.

Bei Ton- und Bewegtbildübertragung ist die synchrone Verarbeitung im gesamten lokalen Netz erforderlich. Diese kann erreicht werden, indem entweder ein geteilter Ring oder eine Doppellinie gebildet werden und von der Hauptstelle (2) in den Pausen Bit- und Worttakt ausgesendet werden.

Wird der Netzaufbau mit Glasfasern vorgenommen, ergeben sich eine Reihe zusätzlicher Möglichkeiten:

Für das Auskoppeln und das Einkoppeln sowie für die Verzögerungsleitung (Vz) können vorteilhaft Bauteile der integrierten Optik eingesetzt werden. Hin- und Rückleitung des Netzwerks können dann in einer Glasfaser über verschiedene Wellenlängen geführt werden. Ein voll synchronisiertes lokales Netzwerk mit Glasfasern kann aus Bauteilen der integrierten Optik aufgebaut werden, wobei nur ein Sender existiert, nämlich die Hauptstelle (2), die laufend Bitserien aussendet. In den Stationen (4) wird aus dem Bitstrom ein Datenstrom, indem L-Bits passieren dürfen und die Nullbits durch Löschen erzeugt werden, was z.B. in Bauteilen der integrierten Optik durch Drehen der Polarisationsebene erreicht werden kann. Bei grösseren lokalen Netzwerken müssen zusätzlich Regeneratoren in die Leitung eingefügt wrden, die ebenfalls mit Impulssendern ausgestattet sind. Der Worttakt kann dadurch übertragen werden, dass nach dem Aussenden von z.B. 16 Bits, die wie beschrieben verändert werden können, von der Hauptstelle (2) ein nicht veränderbares Nullbit zur Kennzeichnung, z.B. eines Doppelwortes, hinzugefügt wird. Durch diese Massnahme werden der Datendurchsatz nur unwesentlich reduziert, die gesamte Verarbeitung aber synchronisiert, stabilisiert und beschleunigt.

**Patentansprüche**

1. Lokales Netzwerk zur Übertragung digitaler Daten, bestehend aus einer Leitung (1) beliebiger Länge in Form einer Linie oder eines geteilten Ringes, in welcher metallische Leiter oder eine Glasfaser enthalten sind, welche eine Hauptstelle (2) aufweist und an welche Stationen (4) angeschlossen sind, zwischen denen die digitalen Daten direkt übertragen werden und die jede eine Empfangseinrichtung (E) und eine Sendeeinrichtung (S) aufweist, bei welchem die Übertragung der Daten in der Hauptsenderichtung mittels von der Hauptstelle (2) ausgehender Meldungsserien aus unmittelbar zeitlich aneinander gefügten Meldungen erfolgt, die am Meldungsanfang und am Meldungsende spezielle, von allen Stationen erkennbare Bitfolgen aufweisen, dadurch gekennzeichnet,
– dass die Stationen (4) passiv an die Leitung (1) angekoppelt sind, wobei die Leitung (1) durch die Ankopplung der Stationen (4) nicht unterbrochen ist,
– dass bei jeder Station (4) die Empfangseinrichtung (E) und die Sendeeinrichtung (S) getrennt voneinander an die Leitung (1) angekoppelt sind und
– dass der zwischen der Empfangseinrichtung (E) und der Sendeeinrichtung (S) jeder Station (4) liegende Teil der Leitung (1) so lang ist, dass die Meldungen bzw. Meldungsserien zwischen den beiden Einrichtungen um mindestens ein Bit verschoben sind.

2. Lokales Netzwerk nach Anspruch 1, dadurch gekennzeichnet,
– dass die Leitung (1) aus einer Sendeleitung und einer Empfangsleitung besteht, die identisch aufgebaut, parallel zueinander verlegt und an ihren der Hauptstelle (2) abgewandten Enden miteinander verbunden sind, und
– dass die Stationen (4) mit ihren Empfangs- und Sendeeinrichtungen (E, S) an die Sendeleitung und mit einer zweiten Empfangseinrichtung an die Empfangsleitung angeschlossen sind.

3. Lokales Netzwerk nach Anspruch 1 oder 2, dadurch gekennzeichnet, dass zur Synchronisation des gesamten Netzes Bittakt, Worttakt und Satztakt, der aus mehreren Worten besteht, von der Hauptstelle (2) immer dann ausgesandt werden, wenn die letzte Meldungsserie das Netz oder zumindest die Sendeleitung verlassen hat.

4. Lokales Netzwerk nach einem der Ansprüche 1 bis 3, dadurch gekennzeichnet,
– dass bei Einsatz von Glasfasern für die Leitungen (1) die Stationen (4) mit Bauteilen der integrierten Optik an dieselben angekoppelt sind und
– dass von der Hauptstelle (2) fortlaufend Bitserien ausgesendet werden, wobei diese von der jeweils meldenden Station (4) in die gewünschte Meldung geändert werden.

5. Lokales Netzwerk nach einem der Ansprüche 1 bis 4, dadurch gekennzeichnet, dass in die Leitungen (1) Regeneratoren eingeschaltet sind.

6. Lokales Netzwerk nach einem der Ansprüche 1 bis 5, dadurch gekennzeichnet, dass die Wirkungsrichtung der Regeneratoren nach Passieren einer Meldungsserie umkehrbar und bei Eintreffen einer neuen Meldungsserie wieder zurückschaltbar ist.

**Claims**

1. Local area network for transmitting digital data, consisting of a line (1) of arbitrary length in the form of a line or of a split ring which contains metallic conductors or a glass fibre, which displays a main station (2) and to which stations (4) are connected between which the digital data are directly transmitted and each of which displays a receiving facility (E) and a transmitting facility (S), in which the data are transmitted in the main transmitting direction by means of series of messages, originating from the main station (2), consisting of messages directly adjoining each other in time which have, at the start of message and at the end of message, bit sequences which can be detected by all stations, characterized in that
– the stations (4) are passively coupled to the line (1), the line (1) not being interrupted by the coupling of the stations (4),
– at each station (4) the receiving facility (E) and the transmitting facility (S) are separately coupled to the line (1), and
– the section of the line (1) located between the receiving facility (E) and the transmitting facility (S) of each station (4) is of such a length that the messages or message series are displaced by at least one bit between the two facilities.

2. Local area network according to Claim 1, characterized in that
– the line (1) consists of a transmitting line and of a receiving line which are of identical construction, are run in parallel with each other and are connected to each other at their ends facing away from the main station (2) and
– the stations (4) are connected with their receiving and transmitting facilities (E, S) to the

transmitting line and with a second receiving facility to the receiving line.

3. Local area network according to Claim 1 or 2, characterized in that, for the purpose of synchronization of the entire network, bit clock, word clock and record clock, which consists of several words, are transmitted by the main station (2) whenever the last message series has left the network or at least the transmitting line.

4. Local area network according to one of Claims 1 to 3, characterized in that
— if glass fibres are used by the lines (1), the stations (4) are coupled to the lines by means of integrated optics components, and
— the main station (2) contiuously transmits bit series which are changed into the desired message by the station (4) signalling in each case.

5. Local area network according to one of Claims 1 to 4, characterized in that regenerative repeaters are inserted into the lines (1).

6. Local area network according to one of Claims 1 to 5, characterized in that the direction of action of the regenerative repeaters is reversible after a message series has passed and can be switched back again when a new message series arrives.

**Revendications**

1. Réseau local pour la transmission de données numériques, réseau constitué d'une liaison (1), d'une longueur quelconque, sous la forme d'une ligne ou d'un anneau scindé, dans laquelle sont contenus des conducteurs métalliques ou bien une fibre de verre, et qui comporte un poste principal (2), et sur laquelle sont raccordées des stations (4) entre lesquelles les données numériques sont directement transmises, et qui comportent chacune un dispositif récepteur (E) et un dispositif émetteur (S) dans lequel la transmission des données dans la direction de l'émetteur principal s'effectue au moyen de séries de messages partant du poste principal (2) et constituées de messages joints les uns aux autres dans le temps qui, au début du message et à la fin du message, comportent des successions de chiffres binaires susceptibles d'être reconnues par toutes les stations, réseau caractérisé:
— en ce que les stations (4) sont couplées de façon passive à la liaison (1), cette liaison (1) n'étant pas interrompue par le couplage des stations (4),

— dans chaque station (4), le dispositif récepteur (E) et le dispositif émetteur (S) sont couplés séparément l'un de l'autre à la liaison (1),
— la partie de la liaison (1) placée entre le dispositif récepteur (E) et le dispositif récepteur (S) de chaque station (4) est d'une longueur telle que les messages ou bien les séries de messages sont décalés entre ces deux dispositifs d'au moins un chiffre binaire.

2. Réseau local selon la revendication 1, caractérisé en ce que:
— la liaison (1) est constituée d'une liaison d'émission et d'une liaison de réception qui sont de constitutions identiques, posées parallèlement l'une à l'autre et qui sont reliées ensemble à leurs extrémités opposées au poste principal (2),
— les stations (4) sont reliées à la liaison d'émission par leurs dispositifs récepteur et émetteur (E, S) et sont reliées à la liaison de réception par un second dispositif récepteur.

3. Réseau local selon la revendication 1 ou 2, caractérisé en ce que, pour la synchronisation de l'ensemble du réseau, un chiffre binaire de synchronisation, un mot de synchronisation et une phase de synchronisation, constituée de plusieurs mots, sont toujours émis à partir du poste principal (2) lorsque la dernière série de messages a quitté le réseau ou tout au moins la liaison d'émission.

4. Réseau local selon une des revendications 1 à 3, caractérisé en ce que:
— lors de la mise en œuvre de fibres de verre pour les liaisons (1), les stations (4) sont couplées à cette liaison par des composants de l'optique intégrée,
— des séries de chiffres binaires sont envoyées de façon continue à partir du poste principal (2), ces séries de chiffres binaires étant transformées en le message souhaité par la station (4) respectivement émettrice.

5. Réseau local selon une des revendications 1 à 4, caractérisé en ce que des régénérateurs sont insérés dans les liaisons (1).

6. Réseau local selon une des revendications 1 à 5, caractérisé en ce que le sens d'intervention des régénérateurs est susceptible d'être inversé après le passage d'une série de messages et est susceptible d'être à nouveau commuté en retour lors de l'intervention d'une nouvelle série de messages.

geteilter RING

Abb. 1

1 geteilter Ring
2 Hauptstation
  2.2 Sendeeinrichtg.
  2.3 Empfangseinr.
3 Stationskoppler
4 Stationen
↟ Hauptsenderichtg.
< Ausbreitg. rückw.

0 094 660

**Stationskoppler**

R Ringleitg. o. Linie
E Empfangseinr.
S Sendeeinrichtg.
K Koppelstellen
Contr. Controler
V₂ Verzögerungsltg.
≫ Hauptsenderichtg
< Ausbreitg. rückw.

**Abb.2**